# FASCICULE DE BREVET EUROPEEN

(11) **EP 2 875 300 B1**
(45) Date de publication et mention de la délivrance du brevet: **17.10.2018**
(21) Numéro de dépôt: 13735311.6
(22) Date de dépôt: 11.07.2013
(51) Int. Cl.: F27B 7/26, F16H 1/04

(54) **DISPOSITIF D'ENTRAÎNEMENT ET FOUR ROTATIF CORRESPONDANT**
ANTRIEBSVORRICHTUNG UND ENTSPRECHENDER DREHOFEN
DRIVE DEVICE AND CORRESPONDING ROTARY FURNACE

(30) Priorité: 17.07.2012 FR 1256912
(43) Date de publication de la demande: 27.05.2015
(73) Titulaire: Ferry Capitain, 52300 Vecqueville (FR)
(72) Inventeur: PRUNIER, Jean-Baptiste, F-52300 Joinville (FR)
(74) Mandataire: Lavoix
(86) Numéro de dépôt international: PCT/EP2013/064738
(87) Numéro de publication internationale: WO 2014/012850

(56) Documents cités:
- CN-A- 102 102 140
- JP-A- 2009 197 311
- US-A- 2 793 920

## Description

La présente invention concerne un four rotatif comprenant une chambre de combustion rotative, et un dispositif d'entraînement en rotation de la chambre de combustion, le dispositif d'entraînement comprenant une couronne dentée d'entraînement fixée en rotation à la chambre de combustion.

On connait du document WO 2010/67183 un dispositif d'entraînement pour un tel four rotatif.

Habituellement, les couronnes dentées d'entraînement des chambres de combustion d'un four rotatif sont fabriquées en acier. Dans le cas particulier des fours rotatifs, aucun autre matériau que l'acier n'a été envisagé à ce jour étant donné que l'arrêt du four rotatif lors du chauffage entraîne des difficultés particulières et peut conduire à une défaillance de la chambre de combustion. L'acier a été jugé comme suffisamment résistant afin de fournir la fiabilité nécessaire.

Toutefois, l'acier est coûteux et la fabrication des couronnes en acier est difficile.

L'invention a pour but de fournir un dispositif d'entraînement pour un four rotatif qui soit économique à fabriquer tout en ayant une fiabilité suffisante.

A cet effet, l'invention a pour objet un four rotatif du type indiqué, caractérisé en ce qu'au moins une partie de la couronne dentée d'entraînement est en fonte, en ce que la fonte est une fonte à graphite sphéroïdale, et en ce que la fonte a une dureté Brinell (HB) qui est supérieure à 250 HB. Des tels matériaux sont connus de JP2009-197311.

Selon des modes de réalisation particuliers, le four rotatif selon l'invention comporte l'une ou plusieurs des caractéristiques suivantes :
- la fonte a une dureté Brinell (HB) qui est supérieure à 320 HB ;
- la couronne dentée d'entraînement est entièrement en fonte ;
- le dispositif d'entraînement (6) comprenant un pignon d'entraînement engrenant avec la couronne dentée d'entraînement, et de préférence comprenant un seul pignon d'entraînement ; et
- le ou chaque pignon d'entraînement est en acier.

L'invention sera mieux comprise à la lecture de la description qui va suivre, donnée uniquement à titre d'exemple et faite en se référant aux dessins annexés sur lesquels :
- la figure 1 est une vue en perspective d'un four rotatif selon l'invention ; et

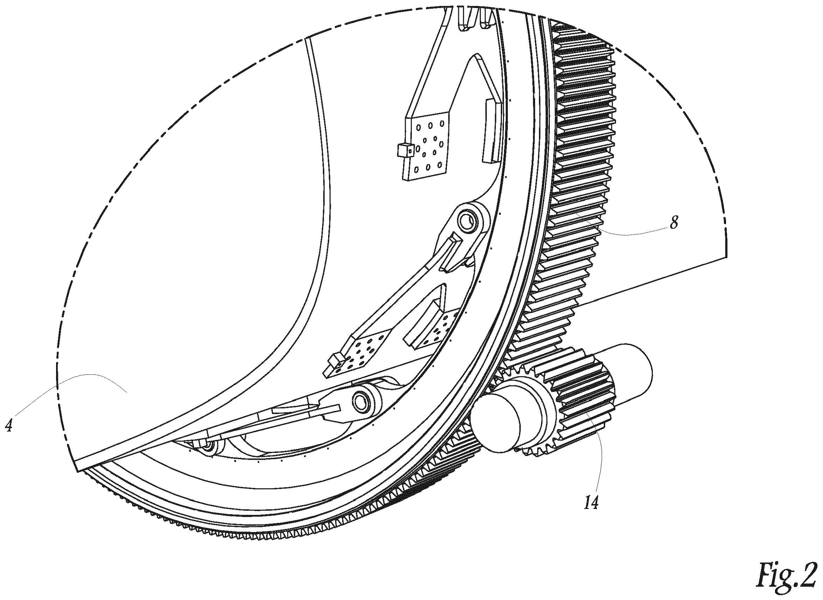

- la figure 2 est une vue en perspective du détail II du four rotatif selon l'invention de la figure 1.

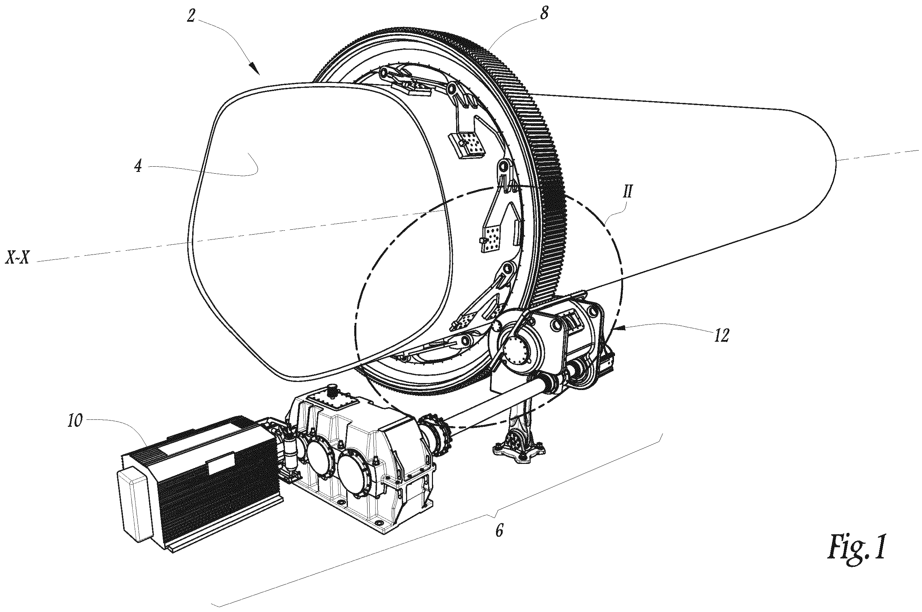

Sur la figure 1 est représenté un four rotatif selon l'invention, désigné par la référence générale 2.

Le four rotatif 2 comprend une chambre de combustion 4 et un dispositif d'entraînement 6.

La chambre à combustion 4 est un corps généralement cylindrique et logé en rotation autour d'un axe de rotation X-X, par exemple sur des paliers non représentés.

Le dispositif d'entraînement 6 est adapté pour entrainer en rotation la chambre à combustion 4 autour de l'axe de rotation X-X.

Le dispositif d'entraînement 6 comprend une couronne dentée 8 d'entraînement. La couronne dentée 8 entoure la chambre de combustion 4 et est fixée en rotation à celle-ci.

Le dispositif d'entraînement 6 comprend également un moteur d'entraînement 10, un réducteur 12 muni d'un pignon d'entraînement 14 qui est un pignon de sortie du réducteur. Le pignon d'entraînement 14 engrène avec la couronne dentée d'entraînement 8. Le réducteur 12 est entrainé par le moteur d'entraînement 10. En l'occurrence, le dispositif d'entraînement comprend un seul pignon d'entraînement 14.

Selon l'invention, la couronne dentée 8 est fabriquée au moins en partie en fonte, et ceci en fonte à graphite sphéroïdale. La couronne dentée 8 est notamment entièrement en fonte et de préférence en fonte à graphite sphéroïdale.

De plus, la dureté Brinell (HB) de la fonte est supérieure à 250 HB, et notamment supérieure à 320 HB.

De préférence, le ou chaque pignon d'entraînement 14 est notamment en acier. De préférence l'acier du pignon d'entraînement 14 a une dureté Brinell (HB) supérieure à 320HB.

Le dispositif d'entraînement et le four rotatif selon l'invention sont économiques en raison de la fabrication en fonte tout en ayant d'une manière surprenante une fiabilité suffisante pour l'entraînement du four rotatif.

## Revendications

1. Four rotatif (2) comprenant :
- une chambre de combustion (4) rotative, et
- un dispositif d'entraînement (6) en rotation de la chambre de combustion (4), le dispositif d'entraînement (6) comprenant une couronne dentée d'entraînement (8) fixée en rotation à la chambre de combustion (4),
**caractérisé en ce qu'**au moins une partie de la couronne dentée d'entraînement (8) est en fonte, **en ce que** la fonte est une fonte à graphite sphéroïdale, et **en ce que** la fonte a une dureté Brinell (HB) qui est supérieure à 250 HB.

2. Four rotatif selon la revendication 1, **caractérisé en ce que** la fonte a une dureté Brinell (HB) qui est supérieure à 320 HB.

3. Four rotatif selon la revendication 1 ou 2, **caractérisé en ce que** la couronne dentée d'entraînement (8) est entièrement en fonte.

4. Four rotatif selon l'une quelconque des revendications 1 à 3, le dispositif d'entraînement (6) comprenant un pignon d'entraînement (14) engrenant avec la couronne dentée d'entraînement (8), et de préférence comprenant un seul pignon d'entraînement.

5. Four rotatif selon la revendication 4, **caractérisé en ce que** le ou chaque pignon d'entraînement (14) est en acier.

## Patentansprüche

1. Rotationsofen (2), aufweisend:
- eine drehbare Verbrennungskammer (4), und
- eine Vorrichtung zum Drehantreiben (6) der Verbrennungskammer (4), wobei die Vorrichtung zum Antreiben (6) einen Antriebszahnkranz (8) aufweist, welcher drehfest mit der Verbrennungskammer (4) verbunden ist,
**gekennzeichnet dadurch, dass** mindestens ein Teil des Antriebszahnkranzes (8) gusseisern ist, dadurch, dass das Gusseisen ein Kugelgraphit-Gusseisen ist, und dadurch, dass das Gusseisen eine Brinellhärte (HB), welche größer als 250 HB ist, hat.

2. Rotationsofen gemäß dem Anspruch 1, **gekennzeichnet dadurch, dass** das Gusseisen eine Brinellhärte (HB), welche größer als 320 HB ist, hat.

3. Rotationsofen gemäß dem Anspruch 1 oder 2, **gekennzeichnet dadurch, dass** der Antriebszahnkranz (8) vollständig aus Gusseisen ist.

4. Rotationsofen gemäß irgendeinem der Ansprüche 1 bis 3, wobei die Vorrichtung zum Antreiben (6) ein Antriebsritzel (14), welches mit dem Antriebszahnkranz (8) kämmt, aufweist und bevorzugt ein einziges Antriebsritzel aufweist.

5. Rotationsofen gemäß dem Anspruch 4, **gekennzeichnet dadurch, dass** das oder jedes Antriebsritzel (14) aus Stahl ist.

## Claims

1. A rotary kiln (2) comprising :
- a rotary combustion chamber (4) and
- a rotary drive device (6) for the combustion chamber (4),
the drive device (6) comprising a drive ring gear (8) torsionally fixed to the combustion chamber, **characterised in that** at least a portion of the drive ring gear (8) is fabricated out of cast iron, **in that** the cast iron is a spheroidal graphite cast iron and **in that** the cast iron has a Brinell Hardness (HB) which is higher than 250HB.

2. The rotary kiln according to claim 1, **characterised in that** the cast iron has a Brinell Hardness (HB) which is higher than 320HB.

3. The rotary kiln according to claim 1 or 2, **characterised in that** the drive ring gear (8) is entirely fabricated out of cast iron.

4. The rotary kiln according to any one of claims 1 to 3 comprising a drive pinion (14) meshing with the drive ring gear (8), and preferably comprising a single drive pinion.

5. The rotary kiln according to claim 4, **characterised in that** the or each drive pinion (14) is made out of steel.
